# EUROPÄISCHE PATENTSCHRIFT

(11) **EP 2 091 775 B1**
(45) Veröffentlichungstag und Bekanntmachung des Hinweises auf die Patenterteilung: **18.06.2014**
(21) Anmeldenummer: 07819034.5
(22) Anmeldetag: 16.10.2007
(51) Int. Cl.: B60N 2/06, B60N 2/07

(54) **SCHIENENSYSTEM UND FAHRZEUGSITZ**
RAIL SYSTEM AND VEHICLE SEAT
SYSTÈME DE GLISSIÈRE ET SIÈGE DE VÉHICULE

(30) Priorität: 15.11.2006 DE 102006054129
(43) Veröffentlichungstag der Anmeldung: 26.08.2009
(73) Patentinhaber: Johnson Controls GmbH, 51399 Burscheid (DE)
(72) Erfinder: SCHMALE, Uwe, 42499 Hückeswagen (DE); FRANK, Paul, 50769 Köln (DE); SORGENFREI, Allen, 130033 Changchun, Jilin (CN)
(74) Vertreter: Schwöbel, Thilo K.
(86) Internationale Anmeldenummer: PCT/EP2007/008965
(87) Internationale Veröffentlichungsnummer: WO 2008/058603

(56) Entgegenhaltungen:
- WO-A-97/45289
- DE-A1- 4 201 354

## Beschreibung

Die Erfindung betrifft einen Fahrzeugsitz, welcher verschiebbar ausgebildet ist. Vorzugsweise erfolgt die Verschiebung in Sitz- und Fahrzeugquerrichtung (Y-Richtung des Fahrzeugs) oder in einer Richtung mit einer Komponente in Y-Richtung. Insbesondere ist eine Verschiebung in Y -Richtung sowie in Sitz- und Fahrzeuglängsrichtung (X-Richtung des Fahrzeugs, d.h. parallel zu einer Hauptfahrtrichtung) vorgesehen. Die Verschiebung in Y- und X-Richtung kann unabhängig voneinander oder auch, unter Verwendung von Koppelmitteln, in abhängiger Weise erfolgen. Die Erfindung betrifft ferner ein nachfolgend in verschiedenen bevorzugten Ausführungsformen beschriebenes Schienensystem, das zum Einsatz in einem derartigen Fahrzeugsitz geeignet ist, aber auch anderweitig Verwendung finden kann. Die Erfindung betrifft insbesondere ein Schienensystem gemäß dem Oberbegriff des Anspruchs 1. Ein derartiges Schienensystem ist aus der WO 97/45 289 A1 bekannt.

Aus der DE 10 2006 037 344 A1 ist ein fahrzeugsitz bekannt, dessen Sitzteil einerseits vorderseitig mittels eines Gelenkarms absenkbar und andererseits querverschieblich (Y-Richtung des Fahrzeugs) ausgebildet ist. Die Querführung erfolgt an der Vorderseite des Sitzteils über eine den Gelenkarm drehbeweglich führende Stange und an der Rückseite des Sitzteils über ein zu dieser Stange parallel verlaufendes stangenartiges Schiebeelement. Das erfindungsgemäße Schienensystem wird nachfolgend am Beispiel dieser rückseitigen Querführung in verschiedenen Ausführungsformen beschrieben. Aus den Druckschriften DE 102 31 097 A1 und DE 200 04 346 U1 sind weiterhin Trägereinrichtungen zur verstellbaren Halterung von Fahrzeugsitzen bekannt, wobei die Trägereinrichtung ein senkrecht zur Fahrtrichtung ausgerichtetes Trägermittel, welches mit einem Fahrzeugsitz verbunden ist, und einen als Rohrprofil ausgebildeten Querträger mit kreisförmigen Querschnitt aufweist, wobei das Trägermittel den Querträger vollständig umgreift und wobei die Trägereinrichtung ein Lagerelement aufweist, in welchem der Querträger verschiebbar gegenüber dem Lagerelement geführt wird. Ferner sind aus den Druckschriften DE 10 2005 020 671 B3, EP 1 228 922 A1 und EP 0 940 288 A2 weitere Fahrzeugsitze bekannt, welche senkrecht zur Hauptfahrtrichtung eines Fahrzeugs verschieblich angeordnet sind.

Einen Teleskopmechanismus mit Wälzkörpem zwischen einem Innenglied und einem Außbnglied offenbart die Druckschrift WI 01/899909.

Aufgabe der vorliegenden Erfindung ist es, einen Fahrzeugsitz an einer Fahrzeugkarosserie derart zu befestigen, dass in vergleichsweise einfacher Weise ein senkrecht zur Hauptbewegungsrichtung eines Fahrzeugs beweglicher Fahrzeugsitz an einer Fahrzeugkarosserie befestigt wird, welcher eine gegenüber dem Stand der Technik deutliche erhöhte Stabilität gegenüber Kraftwirkungen aufweist, wobei die Kraftwirkungen sowohl parallel zur Hauptfahrtrichtung (X-Richtung), beispielsweise durch Verzögerungskräfte im Falle eines Unfalls, als auch in vertikaler Richtung (Z-Richtung), beispielsweise aufgrund einer Gewichtskraft eines Insassen, auf den Fahrzeugsitz wirken und wobei gleichzeitig mit einem im Vergleich zum Stand der Technik erheblich geringeren Kraftaufwand eine Querbewegung des Sitzes, d.h. senkrecht zur Hauptfahrtrichtung (Y-Richtung), ermöglicht wird, insbesondere auch im Falle einer vergleichsweise großen vertikalen Gewichtskraftwirkung auf das Schienensystem.

Diese Aufgabe wird erfindungsgemäß durch ein Schienensystem mit den Merkmalen des Anspruchs 1 gelöst, so dass einerseits der wenigstens eine Querträger von dem wenigstens einem Beschlagteil vollständig umgriffen wird, so dass eine hohe Stabilität bei Kraftwirkungen senkrecht zum Querträger gewährleistet ist und andererseits zwischen dem Querträger und dem Beschlagteil Wälzkörper angeordnet sind, so dass eine leichtgängige Querverschiebung auch bei vergleichsweise hohen Kraftwirkungen senkrecht zum Querträger erreicht wird. Bevorzugt weisen die Wälzkörper eine Kugelform auf. Ferner wird eine vergleichsweise kostengünstige Herstellung ermöglicht, da das Schienensystem lediglich eine minimale Anzahl von verschiedenen Bauteilen aufweist, welche allesamt in bekannten und kostengünstigen Verfahren herstellbar sind. Bevorzugt ist allen Ausbildungen der Erfindung gemein, dass das Schienensystem, mindestens einen in Schienenlängsrichtung, d.h. insbesondere senkrecht zur Hauptfahrtrichtung (im konkreten Ausführungsbeispiel also in Y-Richtung), profilartig verlaufenden Grundkörper bzw. Querträger und mindestens eine darauf verschieblich angeordnete Hülse bzw. Beschlagteil umfasst, welche über die zwischen dem Beschlagteil und dem Querträger angeordneten, vorzugsweise kugelförmigen Wälzkörper auf dem Querträger verschieblich gelagert ist. Im Querschnitt gesehen weist die Lagerung vorzugweise insgesamt vier zueinander beabstandete Wälzkörper auf. Bevorzugt wiederholt sich diese Anordnung in Schienenlängsrichtung bzw. senkrecht zur Hauptfahrtrichtung mindestens zweimal. Die Lagerung trägt somit in allen Richtungen, die von der Schienenlängsrichtung abweichen.

Erfindungsgemäß ist zwischen dem Querträger und wenigstens einem Wälzkörper ein Spannelement derart angeordnet, dass eine und wenigstens einem Wälzkörper ein Spannelement derart angeordnet, dass eine Kraftwirkung des Wälzkörpers in Richtung des Beschlagteils durch die Spannkraft des Spannelements erzeugt wird. Vorteilhaft werden daher einerseits Spielräume zwischen dem Wälzkörper und dem Querträger und somit eine Relativbewegung zwischen dem Querträger und dem Beschlagteil senkrecht zum Querträger verhindert und andererseits die Herstellungstoleranzen der Schienensystemkomponenten erheblich erhöht und somit ein kostengünstigerer Herstellungsprozess ermöglich.

Vorteilhafte Ausgestaltungen und Weiterbildungen der Erfindung sind den Unteransprüchen, sowie der Beschreibung unter Bezugnahme auf die Zeichnung entnehmbar.

Gemäß einer bevorzugten Weiterbildung ist das Beschlagteil auf Längsschienen angeordnet und gegenüber den Längsschienen parallel zur Hauptfahrtrichtung verschiebbar. Vorteilhaft wird somit ein Fahrzeugsitz realisiert, welcher in Längsrichtung, in Querrichtung und/oder in eine Richtung mit einer Komponente in Querrichtung und einer Komponente in Längsrichtung verschiebbar ist. Wobei bevorzugt eine Verschiebung in Quer- und Längsrichtung vorgesehen ist, welche unabhängig und/oder unter Verwendung von Koppelmitteln abhängig voneinander sind.

Insbesondere ist es erfindungsgemäß bevorzugt, dass das Spannelement mit Bezug auf Maßtoleranzen, insbesondere Maßtoleranzen des Wälzkörpers, eine progressive Kennlinie aufweist. Hierdurch ist es erfindungsgemäß vorteilhaft möglich, dass bei einem vorgegebenen Maßtoleranzfeld lediglich eine minimale Verkippbarkeit bei einem vorgegebenen Kippmoment möglich ist. Beispielsweise kann so die Anforderung erfüllt werden, dass bei einer am Fahrzeugsitz (beispielsweise an der Lehne des Fahrzeugsitzes) angreifenden vorgegebenen Kraft (von beispielsweise 900 N), welche ein Kippmoment bzw. ein Drehmoment auf den Querträger (und damit eine Auslenkkraft das Spannelement an der Lagerstelle zwischen dem Wälzkörper und dem Spannelement) ausübt, lediglich eine maximale Verkippung von beispielsweise etwa 0,33° in beide Richtungen (bzw. eine Gesamtverkippung von beispielsweise etwa 0,6°) erzeugt. Hierzu ist es vorgesehen, dass das Spannelement derart am Querträger (beispielsweise an einem Hohlrohr des Querträgers) befestigt ist, dass es aufgrund der Formgebung des Spannelements und aufgrund der Anbindung des Spannelements am Querträger und unter Berücksichtigung der Kraftwirkung zwischen dem Wälzkörper und dem Spannelement zu einer progressiven Federkennlinie bzw. progressiven Kennlinie des Spannelements (insbesondere bezogen auf eine Maßtoleranz des Durchmessers und/oder der Anordnung des Wälzkörpers) kommt. Erfindungsgemäß kann dies beispielsweise dadurch realisiert sein, dass das Spannelement am Querträger bzw. am Hohlrohr des Querträgers zumindest teilweise anliegt bzw. aufliegt, wobei sich der Kontaktpunkt zwischen dem Querträger und dem Spannelement bei Auslenkung des Spannelements verschiebt und somit die Federkennlinie progressiv gestaltet (beispielsweise in Richtung zu höheren Kräften (d.h. einer progressiv ansteigenden Federkennlinie) durch Verringerung des federnden effektiven Hebelarms des Spannelements, wenn der Kontaktpunkt zwischen dem Querträger und dem Spannelement bei Auslenkung des Spannelements sich näher zur Kraftlinie zwischen dem Spannelement und dem Wälzkörper verschiebt oder beispielsweise in Richtung zu niedrigeren Kräften (d.h. einer progressiv abfallenden Federkennlinie) durch Vergrößerung des federnden effektiven Hebelarms des Spannelements, wenn der Kontaktpunkt zwischen dem Querträger und dem Spannelement bei Auslenkung des Spannelements sich näher zur Kraftlinie zwischen dem Spannelement und dem Wälzkörper verschiebt).

Gemäß einer weiteren bevorzugten Weiterbildung sind wenigstens zwei Wälzkörper spiegelsymmetrisch und/oder rotationssymmetrisch um den Querträger herum angeordnet, wobei insbesondere die Spiegelebene und/oder die Rotationsachse durch einen Mittelpunkt des Querträgers in einer Längsrichtung verlaufen. Vorteilhaft wird somit eine stabile und sichere Anordnung des Querträgers im Beschlagteil in einfacher Weise realisiert, wobei gleichzeitig eine Berührung zwischen Querträger und Beschlagteil sicher verhindert wird. Dadurch wird die Querverschiebung des Querträgers relativ zum Beschlagteil mit einem im Vergleich zum Stand der Technik erheblich, geringerem Kraftaufwand ermöglicht.

Gemäß einer weiteren bevorzugten Weiterbildung weist der Querträger und/oder das Beschlagteil im Kontaktbereich mit einem Wälzkörper eine Ausnehmung auf, so dass der Wälzkörper durch die Ausnehmung geführt wird. Vorteilhaft ermöglicht die Ausnehmung im Kontaktbereich des Querträgers und im Kontaktbereich des Beschlagteils eine Führung des Wälzkörpers und gleichzeitig des Querträgers. Insbesondere wird durch zwei spiegelsymmetrisch um den Mittelpunkt des Querträgers angeordnete Wälzkörper mit einer vertikalen Spiegelebene, welche eine Flächennormale im Wesentlichen parallel zur Hauptfahrtrichtung aufweist, der Querträger derart geführt, dass eine vertikale Kraftwirkung auf den Querträger durch die Ausnehmungen zusammen mit den spiegelsymmetrischen Wälzkörpern in den Ausnehmungen aufgenommen werden. Wälzkörper auf der Ober- oder Unterseite des Querträgers sind in dieser Anordnung nicht erforderlich. Bevorzugt ist eine derartige Anordnung vorgesehen, wobei die Spiegelebene im Wesentlichen horizontal und die Flächennormale der Spiegelebene vertikal ausgerichtet sind.

Gemäß einer weiteren bevorzugten Weiterbildung weist das Beschlagteil in einem Querschnitt parallel zur Fahrtrichtung L-förmige Kanten, insbesondere abgerundete Kanten, auf, wobei wenigstens ein Wälzkörper in einer Kante zwischen dem Beschlagteil und dem Querträger oder zwischen dem Beschlagteil und dem Spannelement geführt wird. Vorteilhaft wird durch die Führung der Wälzkörper in den Kanten des Beschlagteils in einfacher Weise eine Arretierung der Wälzkörper zwischen dem Querträger und dem Beschlagteil erzielt. Bevorzugt ist ein Beschlagteil mit einem viereckigen Innenumfang vorgesehen, wobei im Hinblick auf den Querschnitt des Beschlagteils die Wälzkörper in zwei diagonal gegenüberliegenden Innenkanten oder in allen vier Kanten angeordnet sind. Besonders bevorzugt ist zur Erhöhung der Fertigungstoleranz der Einzelkomponenten zusätzlich die Anordnung der Spannelemente zwischen den Wälzkörpern und dem Querträger vorgesehen.

Gemäß einer weiteren bevorzugten Weiterbildung umfasst der Querträger zwei parallele Hohlrohre und wenigstens eine Strebe umfasst, wobei die Hohlröhren durch die wenigstens eine zu diesen parallele und/oder senkrechte Strebe miteinander verbunden sind. Vorteilhaft wird somit in besonders einfacher und kostengünstiger Weise ein vergleichsweise stabiler und verwindungssteifer Querträger, insbesondere durch die Verwendung von vergleichsweise günstigen Standardkomponenten, realisiert.

Gemäß einer weiteren bevorzugten Weiterbildung erstreckt sich das Beschlagteil nahezu über die gesamte Länge des Querträgers, so dass in besonders vorteilhafter Weise eine formschlüssige Arretierung des Querträgers gegenüber Kraftwirkungen senkrecht zum Querträger durch das Beschlagteil über nahezu die gesamte Länge des Querträgers erfolgt und somit ein besonders stabiles Schienensystem realisierbar ist.

Gemäß einer weiteren bevorzugten Weiterbildung umfasst das Spannelement eine Blattfeder, wobei die Blattfeder bevorzugt eine S-Form aufweist. Vorteilhaft wird somit in einfacher und kostengünstiger Weise ein Spannelement realisiert. Eine S-förmige Blattfeder umfasst einen ersten Kontaktbereich zum Kontakt mit dem einen Wälzkörper oder mit mehreren Wälzkörpern, sowie einen zweiten Kontaktbereich zum Kontakt mit dem Querträger, wobei bevorzugt der zweite Kontaktbereich zwischen zwei ersten Kontaktbereichen liegt.

Ein weiterer Gegenstand der vorliegenden Erfindung ist ein Fahrzeugsitz mit einem erfindungsgemäßen Schienensystem, wobei der Fahrzeugsitz am Querträger und insbesondere an den Enden des Querträgers befestigt ist. Vorteilhaft wird somit eine vergleichsweise stabile Fixierung des Fahrzeugsitzes an der Karosserie eines Fahrzeugs ermöglicht, wobei der Fahrzeugsitz in der Querrichtung mit vergleichsweise geringem Kraftaufwand verschiebbar ist.

Gemäß einer weiteren Weiterbildung ist der Fahrzeugsitz parallel und/oder senkrecht zur Hauptfahrtrichtung beweglich. Vorteilhaft ist für einen Insassen somit eine Anpassung der Sitzposition in Querrichtung und/oder in Längsrichtung möglich.

Ausführungsbeispiele der Erfindung sind in den Zeichnungen dargestellt und in der nachfolgenden Beschreibung näher erläutert.

Es zeigen
**Figur 1a** eine schematische Querschnittansicht eines erfindungsgemäßen Schienensystems gemäß einer ersten Ausführungsform der vorliegenden Erfindung,
**Figur 1b** eine schematische Frontalansicht eines erfindungsgemäßen Schienensystems gemäß der ersten Ausführungsform der vorliegenden Erfindung,
**Figur 1c** eine schematische Perspektivansicht eines erfindungsgemäßen Schienensystems gemäß der ersten Ausführungsform der vorliegenden Erfindung,
**Figur 2a** eine schematische Querschnittansicht eines erfindungsgemäßen Schienensystems gemäß einer zweiten Ausführungsform der vorliegenden Erfindung,
**Figur 2b** eine schematische Frontalansicht eines erfindungsgemäßen Schienensystems gemäß der zweiten Ausführungsform der vorliegenden Erfindung,
**Figur 3a** eine schematische Querschnittansicht eines erfindungsgemäßen Schienensystems gemäß einer dritten Ausführungsform der vorliegenden Erfindung,
**Figur 3b** eine schematische Frontalansicht eines erfindungsgemäßen Schienensystems gemäß der dritten Ausführungsform der vorliegenden Erfindung,
**Figur 3c** eine schematische Perspektivansicht eines erfindungsgemäßen Schienensystems gemäß der dritten Ausführungsform der vorliegenden Erfindung,
**Figur 4a** eine schematische Querschnittansicht eines erfindungsgemäßen Schienensystems gemäß einer vierten Ausführungsform der vorliegenden Erfindung
**Figur 4b** eine schematische Perspektivansicht eines erfindungsgemäßen Schienensystems gemäß der vierten Ausführungsform der vorliegenden Erfindung und **Figur 5a** bzw. **Figur 5b** eine schematische Seitendarstellung eines am Querträger angebrachten Spannelements und eines Wälzkörpers.

In den verschiedenen Figuren sind gleiche Teile stets mit den gleichen Bezugszeichen versehen und werden daher in der Regel auch jeweils nur einmal erwähnt

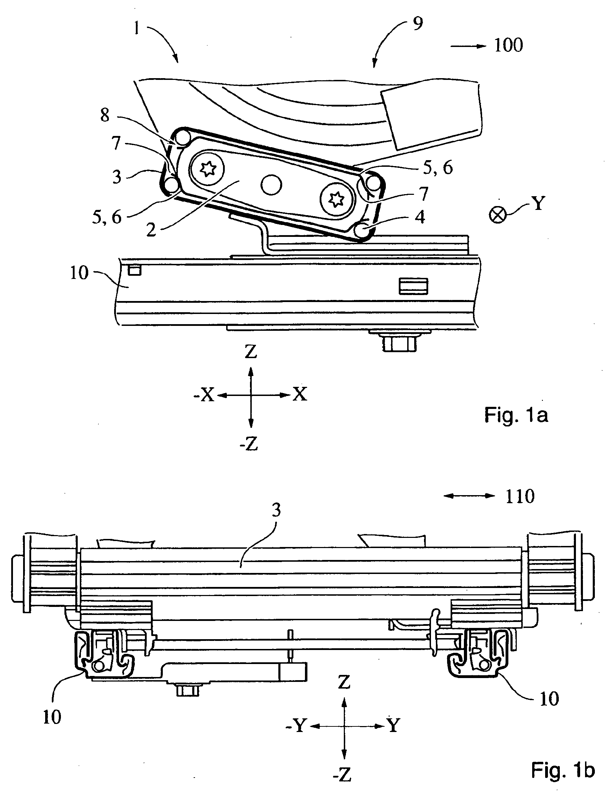

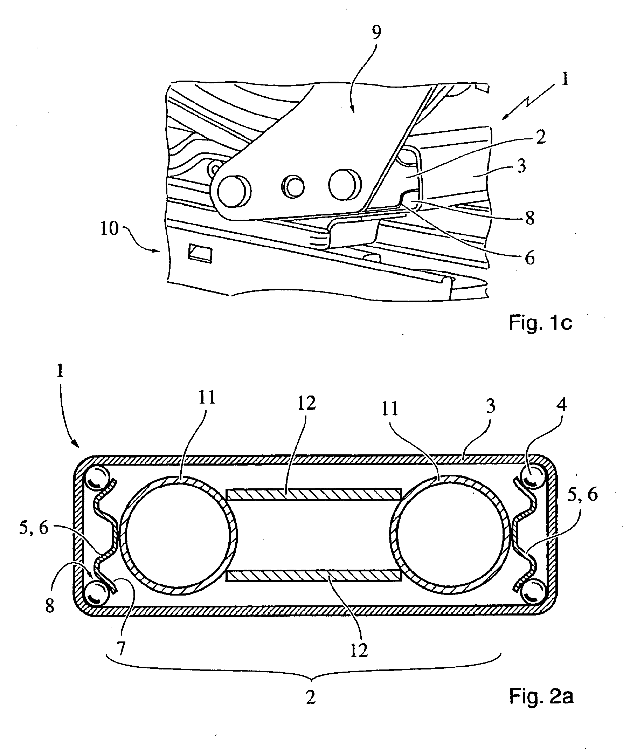

In **Figur 1a, 1b** **und** **1c** ist eine schematische Querschnittansicht, Frontalansicht und Perspektivansicht eines erfindungsgemäßen Schienensystems 1 für einen Fahrzeugsitz 9 gemäß einer ersten Ausführungsform der vorliegenden Erfindung dargestellt, wobei das Schienensystem 1 wenigstens ein profiliertes Beschlagteil 3 und wenigstens einen senkrecht zu einer Hauptfahrtrichtung 100 angeordneten Querträger 2 aufweist, wobei das wenigstens eine Beschlagteil 3 den Querträger 2 vollständig umgreift und wobei der Querträger 2 gegenüber dem Beschlagteil 3 in einer Querrichtung senkrecht zur Hauptfahrtrichtung 100 verschiebbar ist, und wobei ferner das Schienensystem 1 Wälzkörper 4 aufweist, welche den Querträger 2 im Innern des Beschlagteils 3 führen und zwischen dem Querträger 2 und dem Beschlagteil 3 angeordnet sind. Im Querschnitt gesehen weist die Lagerung insgesamt vier zueinander beabstandete Wälzkörper 4 auf wobei sich diese Anordnung in der Querrichtung 110 bevorzugt mindestens zweimal wiederholt, so dass diese Lagerung somit in allen Richtungen, die von der Querrichtung 110 abweichen, trägt. Der Querträger 4 ist im Querschnitt etwa elliptisch ausgebildet und ist im Bereich seiner geringsten Ausdehnung mit zwei tangential an dem Querträger 2 anliegenden Spannelementen 5 in Form von Blattfedern 6 ausgestattet. Die Blattfedern 6 sind insbesondere einander relativ zum Querträger 4 gegenüberliegend anordnet, zueinander parallel und liegen mittig auf dem Querträger 4 auf. Mit ihren freien, kragenartig gebogenen Enden 7 ragen sie in Richtung der L-förmigen Kanten 112 des näherungsweise rechteckig ausgebildeten Beschlagteils 3 und bilden dort gemeinsam mit dem Beschlagteil 3 Führungskanäle 8 für die in jeder Kante 112 des Beschlagteils 3 angeordneten Wälzkörper 4 aus. Die Wälzkörper 4 werden dabei von den vorgespannten Blattfedern 6 vom Querträger 2 weg in Richtung des Beschlagteils 3 gepresst. Durch diese Ausbildung werden Toleranzen am Innenumfang des Beschlagteils 3 kompensiert und die Verschiebekräfte verringert. Das zur Querverschiebung dienende Schienensystem 1 ist auf zweite in Hauptfahrtrichtung 100 verlaufende Längsschienen 10 aufgesetzt, das der Längsverschiebung dient. Das Beschlagteil 3 ist in Querrichtung kürzer die Länge des Querträgers 2 in Querrichtung, um die Querverschiebung desselben relativ zum Querträger 2 zu ermöglichen.

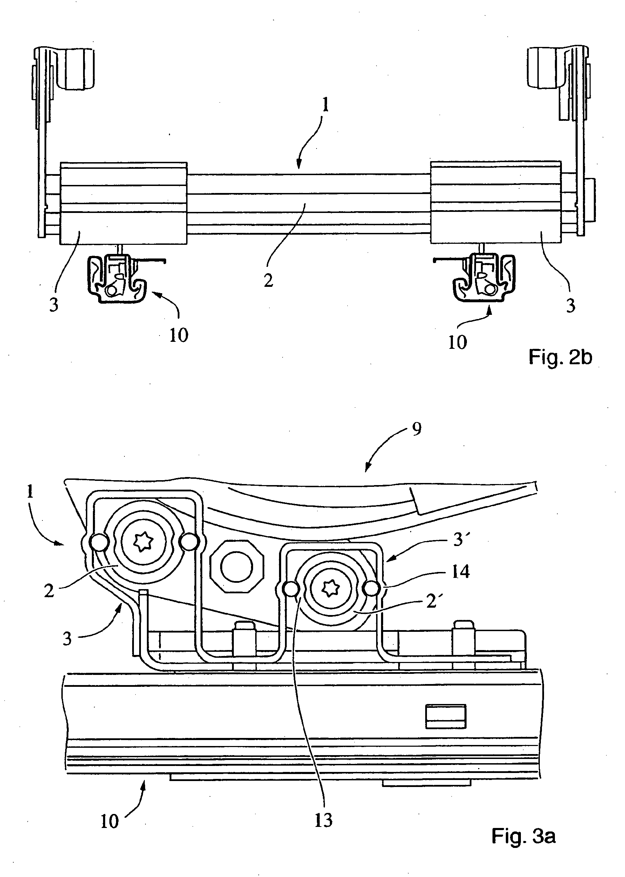

In **Figur 2a** und **2b** ist eine schematische Querschnittansicht und eine Frontalansicht eines erfindungsgemäßen Schienensystems 1 für einen Fahrzeugsitz 9 gemäß einer beispielhaften zweiten Ausführungsform der vorliegenden Erfindung dargestellt, wobei die zweite Ausführungsform im Wesentlichen identisch der ersten Ausführungsform dargestellt in den Figuren 1a bis 1c ist, wobei der Querträger 2 aus zwei zueinander parallel verlaufenden Hohlröhren 11 gefertigt ist, die miteinander über Streben 12 beispielsweise durch Verschweißen verbunden sind. Die beiden Blattfedern 6 sind im Bereich der größten Ausdehnung des Querträgers 2 tangential auf die Hohlrohre 11 aufgesetzt und ragen in Richtung der Kanten 112 des gleichfalls rechteckigen Beschlagteils 3, wo sie unter Vorspannung die Führungskanäle 8 ausbilden. In Figur 2b ist ein Sitzsystem dargestellt, welches bevorzugt zwei gesonderte Beschlagteile 3 umfasst, welche in Querrichtung (Y-Richtung) beabstandet voneinander auf einem Querträger 2 angeordnet sind.

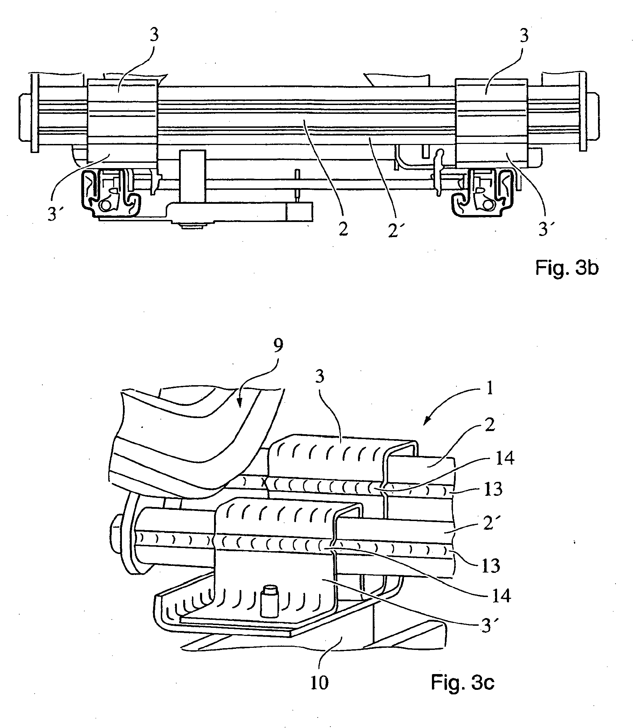

In **Figur 3a**, **3b** und **3c** ist eine schematische Querschnittansicht, Frontalansicht und Perspektivansicht eines erfindungsgemäßen Schienensystems 1 für einen Fahrzeugsitz 9 gemäß einer dritten Ausführungsform der vorliegenden Erfindung dargestellt, wobei die dritte Ausführungsform im Wesentlichen identisch der zweiten Ausführungsform dargestellt in den Figuren 2a und 2b ist, wobei zwei Querträger 2, 2' zueinander parallel beabstandet angeordnet sind. Die Querträger 2, 2' weisen im Wesentlichen einen Kreisquerschnitt auf, sind jedoch jeweils mit zwei einander gegenüberliegenden, in Querrichtung verlaufenden Ausnehmungen bzw. Einbuchtungen 14 versehen, welche einen Teil der Führungskanäle 8 bilden. Die Querträger 2, 2' laufen in zwei Beschlagteilen 3, 3', die beispielsweise einstöckig und zueinander beabstandet aus einem mehrfach U-förmig gekanteten Blechstück gefertigt sind. Im Bereich der Einbuchtungen 14 der Querträger 2, 2' weisen die Beschlagteile 3, 3' ebenfalls entsprechende Ausnehmungen Auswölbungen 13 aus, in denen jeweils zwei Wälzkörper 4 entlang einer horizontalen Ebene laufen. Durch eine Aufweitung der Beschlagteile 3 findet insbesondere ein Ausgleich von Fertigungstoleranzen und eine Vorspannung des Schienensystems 1 statt.

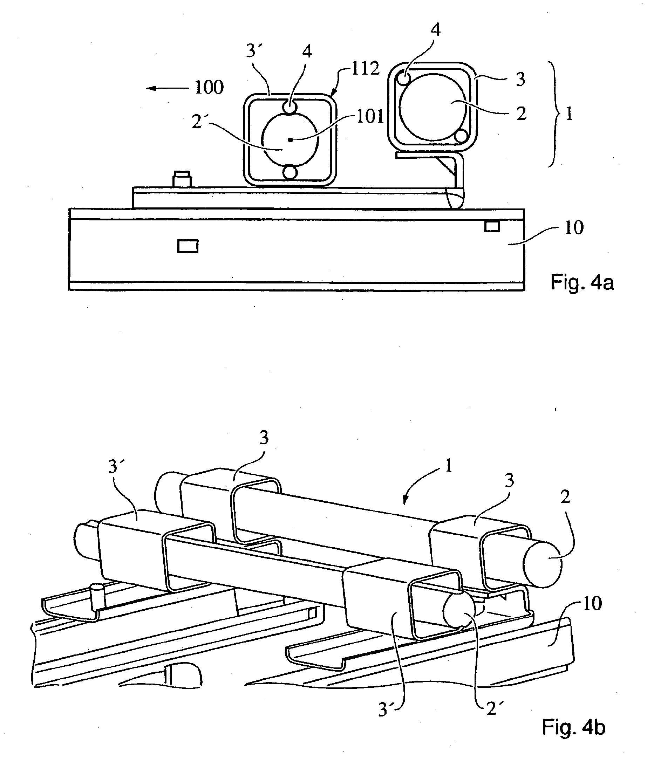

In **Figur 4a** und **4b** ist eine schematische Querschnittansicht und Perspektivansicht eines erfindungsgemäßen Schienensystems 1 für einen Fahrzeugsitz 9 gemäß einer beispielhaften vierten Ausführungsform der vorliegenden Erfindung dargestellt, wobei die vierte Ausführungsform im Wesentlichen identisch der dritten Ausführungsform ist, wobei anstelle der Hohlröhren 11 als Querträger 2, 2' zwei Stangen 15 aus Vollmaterial dargestellt sind. Die jeweiligen zugeordneten Beschlagteile 3, 3' sind dabei bevorzugt aus einem Rohrprofil mit in etwa quadratischem Querschnitt gefertigt, wobei jeweils zwei Wälzkörper 4 in dem Beschlagteil 3' entlang einer vertikalen Ebene und in dem Beschlagteil 3 entlang einer diagonal zum Beschlagteil 3 anordneten Ebene laufen.

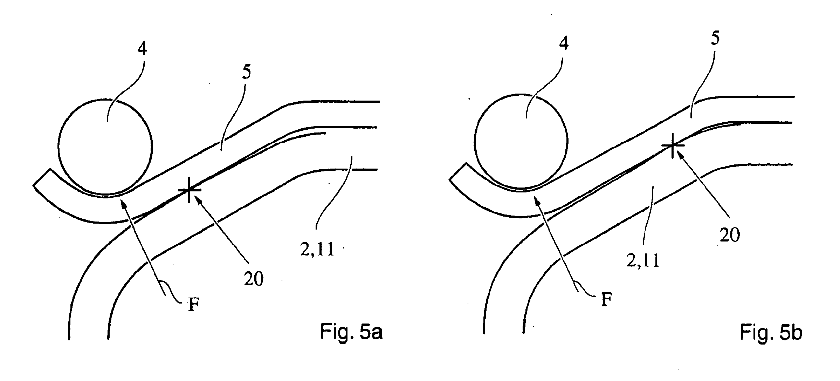

In den Figuren 5a und 5b sind zwei verschiedene schematische Seitendarstellung des am Querträger 2 (bzw. an dem Hohlrohr 11 des Querträgers) angebrachten Spannelements 5 (beispielsweise in Form einer Blattfeder) sowie des Wälzkörpers 4 dargestellt. Hieraus geht hervor, dass die Formgebung des Spannelements 5 relativ zum Querträger 2 bzw. zum Hohlrohr 11 des Querträgers 2 derart vorgesehen ist, dass ein Kontaktpunkt 20 zwischen dem Spannelement 5 und dem Hohlrohr 11 bzw. dem Querträger 2 die für die Federwirkung des Spannelements 5 wirksame Hebellänge definiert. Die Charakteristik des Spannelements 5 ist nun derart progressiv vorgesehen, dass sich der Kontaktpunkt 20 bei Belastung bzw. Entlastung des Spannelements 5 (d.h. bei einer mehr oder weniger großen Auslenkung des Spannelements 5) verschiebt. Dadurch verändert sich auch die Länge des wirksamen Hebelarms des Spannelements 5. In der Figur 5b ist beispielsweise die Anordnung des Spannelements 5 relativ zum Wälzkörper 4 in der Nennpositionierung dargestellt, bei welcher der Kontaktpunkt 20 zwischen dem Spannelement 5 und dem Querträger 2 vergleichsweise weit von der Wirklinie der zwischen dem Spannelement 5 und dem Wälzkörper 4 wirkenden Kraft F (bzw. Gegenkraft) entfernt ist. Wird aufgrund von Maßtoleranzen ein Wälzkörper 4 mit einem größeren Durchmesser verbaut, stellt sich die in der Figur 5a dargestellte Situation ein, bei der der Kontaktpunkt 20 zwischen dem Spannelement 5 und dem Querträger 2 näher bei der Wirklinie der zwischen dem Spannelement 5 und dem Wälzkörper 4 wirkenden Kraft F (bzw. Gegenkraft) verläuft, was zu einem verkürzten Hebelarm (im wesentlichen die Strecke des Spannelements 5 zwischen dem Kontaktpunkt 20 und dem Schnittpunkt mit der Wirklinie der Kraft F) und somit einer ansteigenden (d.h. progressiven) Federkennlinie des Spannelements 5 führt.

### Bezugszeichenliste:

- 1: Schienensystem
- 2: 2, 2' Querträger
- 3, 3': Beschlagteil
- 4: Wälzkörper
- 5: Spannelement
- 6: Blattfeder
- 7: Ende
- 8: Führungskanal
- 9: Fahrzeugsitz
- 10: Längsschienen
- 11: Hohlrohr
- 12: Strebe
- 13: Auswölbungen
- 14: Ausnehmung
- 15: Stange
- 20: Kontaktpunkt
- 100: Hauptfahrtrichtung
- 101: Mittelpunkt
- 112: Kanten
- F: Kraft

## Patentansprüche

1. Schienensystem (1) für einen Fahrzeugsitz (9) mit wenigstens einem profilierten Beschlagteil (3) und wenigstens einem senkrecht zu einer Hauptfahrtrichtung (100) angeordneten Querträger (2), wobei der Querträger (2) gegenüber dem Beschlagteil (3) senkrecht zur Hauptfahrtrichtung (100) verschiebbar ist, und wobei das Schienensystem (1) Wälzkörper (4) aufweist, welche den Querträger (2) im Innern des Beschlagteils (3) führen und zwischen dem Querträger (2) und dem Beschlagteil (3) angeordnet sind, **dadurch gekennzeichnet, dass** das wenigstens eine Beschlagteil (3) den Querträger (2) vollständig umgreift und dass zwischen dem Querträger (2) und wenigstens einem Wälzkörper (4) ein Spannelement (5) derart angeordnet ist, dass eine Kraftwirkung des Wälzkörpers (4) in Richtung des Beschlagteils (3) durch die Spannkraft des Spannelements (5) erzeugt wird.

2. Schienensystem (1) nach Anspruch 1, **dadurch gekennzeichnet, dass** das Beschlagteil (3) auf Längsschienen (10) angeordnet ist und gegenüber den Längsschienen (10) parallel zur Hauptfahrtrichtung (100) verschiebbar ist.

3. Schienensystem (1) nach einem der vorhergehenden Ansprüche, **dadurch gekennzeichnet, dass** das Spannelement (5) mit Bezug auf Maßtoleranzen, insbesondere Maßtoleranzen des Wälzkörpers (4), eine progressive Kennlinie aufweist.

4. Schienensystem (1) nach einem der vorhergehenden Ansprüche, **dadurch gekennzeichnet, dass** wenigstens zwei Wälzkörper (4) spiegelsymmetrisch und/oder rotationssymmetrisch um den Querträger (2) herum angeordnet sind, wobei insbesondere die Spiegelebene und/oder die Rotationsachse durch einen Mittelpunkt (101) des Querträgers (2) in einer Längsrichtung verläuft.

5. Schienensystem (1) nach einem der vorhergehenden Ansprüche, **dadurch gekennzeichnet, dass** der Querträger (2) und/oder das Beschlagteil (3) im Kontaktbereich mit einem Wälzkörper (4) eine Ausnehmung (14) aufweist, so dass der Wälzkörper (4) durch die Ausnehmung (14) geführt wird.

6. Schienensystem (1) nach einem der vorhergehenden Ansprüche, **dadurch gekennzeichnet, dass** das Beschlagteil (3) in einem Querschnitt parallel zur Fahrtrichtung (100) L-förmige Kanten (112), insbesondere abgerundete Kanten (112), aufweist und wenigstens ein Wälzkörper (4) in einer Kante (112) zwischen dem Beschlagteil (3) und dem Querträger (2) oder zwischen dem Beschlagteil (3) und dem Spannelement (5) geführt wird.

7. Schienensystem (1) nach einem der vorhergehenden Ansprüche, **dadurch gekennzeichnet, dass** der Querträger (2) zwei parallele Hohlrohre (11) und wenigstens eine Strebe (12) umfasst, wobei die Hohlröhren (11) durch die wenigstens eine zu diesen parallele und/oder senkrechte Strebe (12) miteinander verbunden sind.

8. Schienensystem (1) nach einem der vorhergehenden Ansprüche, **dadurch gekennzeichnet, dass** sich das Beschlagteil (3) nahezu über die gesamte Länge des Querträgers (2) erstreckt.

9. Schienensystem (1) nach einem der vorhergehenden Ansprüche, **dadurch gekennzeichnet, dass** das Spannelement (5) eine Blattfeder umfasst, wobei die Blattfeder bevorzugt eine S-Form aufweist.

10. Fahrzeugsitz (9) mit einem Schienensystem (1) gemäß einem der vorhergehenden Ansprüche, **dadurch gekennzeichnet, dass** der Fahrzeugsitz (9) am Querträger (2) und insbesondere an den Enden des Querträgers (9) befestigt ist.

11. Fahrzeugsitz (9) nach Anspruch 10, **dadurch gekennzeichnet, dass** der Fahrzeugsitz (9) parallel und/oder senkrecht zur Hauptfahrtrichtung (100) beweglich ist.

## Claims

1. Rail system (1) for a vehicle seat (9) with at least one profiled fitting part (3) and at least one cross member (2) arranged perpendicular to a main direction of travel (100), wherein the at least one fitting part (3) completely surrounds the cross member (2) and wherein the cross member (2) is displaceable in relation to the fitting part (3) perpendicular to the main direction of travel (100), **characterised in that** a clamping element (5) is arranged between the cross member (2) and at least one rolling body (4) so that a force action of the rolling body (4) is produced in the direction of the fitting part (3) by the clamping force of the clamping element (5) and that the rail system (1) has rolling bodies (4) which guide the cross member (2) in the interior of the fitting part (3) and are arranged between the cross member (2) and the fitting part (3).

2. Rail system (1) in accordance with claim 1, **characterised in that** the fitting part (3) is arranged on longitudinal rails (10) and is displaceable in relation to the longitudinal rails (10) parallel to the main direction of travel (100).

3. Rail system (1) in accordance with one of the preceding claims, **characterised in that** the clamping element (5) exhibits a progressive characteristic in relation to dimensional tolerances, in particular dimensional tolerances of the rolling body (4).

4. Rail system (1) in accordance with one of the preceding claims, **characterised in that** at least two rolling bodies (4) are arranged in mirror symmetry and/or rotational symmetry around the cross member (2), wherein the plane of the mirror and/or the axis of rotation in particular pass through the centre (101) of the cross member (2) in a longitudinal direction.

5. Rail system (1) in accordance with one of the preceding claims, **characterised in that** the cross member (2) and/or the fitting part(3) have a recess (14) in the contact area with a rolling body (4), so that the rolling body (4) is guided by the recess (14).

6. Rail system (1) in accordance with one of the preceding claims, **characterised in that** fitting part (3) has L-shaped edges (112) in a cross section parallel to the direction of travel (100), in particular radiused edges (112), and at least one rolling body (4) is guided in an edge (112) between the fitting part (3) and the cross member (2) or between the fitting part (3) and the clamping element (5).

7. Rail system (1) in accordance with one of the preceding claims, **characterised in that** the cross member (2) comprises two parallel hollow tubes (11) and at least one strut (12), wherein the hollow tubes (11) are connected together by the at least one strut (12) parallel and/or perpendicular to them.

8. Rail system (1) in accordance with one of the preceding claims, **characterised in that** the fitting part (3) extends over almost the whole length of the cross member (2).

9. Rail system (1) in accordance with one of the preceding claims, **characterised in that** the clamping element (5) comprises a leaf spring, wherein the leaf spring preferably has an S shape.

10. Vehicle seat (9) with a rail system (1) in accordance with one of the preceding claims, **characterised in that** the vehicle seat (9) is fastened on the cross member (2) and in particular at the ends of the cross member (9).

11. Vehicle seat (9) in accordance with claim 10, **characterised in that** the vehicle seat (9) is movable parallel and/or perpendicular to the main direction of travel (100).

## Revendications

1. Système de rail (1) pour siège de véhicule (9), comportant au moins une pièce de ferrure profilée (3) et au moins un support transversal (2) disposé perpendiculairement à un sens de déplacement principal (100), le support transversal (2) étant déplaçable par rapport à la pièce de ferrure (3) perpendiculairement au sens de déplacement principal (100) et le système de rail (1) présentant des corps de roulement (4) qui guident le support transversal (2) à l'intérieur de la pièce de ferrure (3) et sont disposés entre le support transversal (2) et la pièce de ferrure (3), **caractérisé en ce que** l'au moins une pièce de ferrure (3) entoure complètement le support transversal (2) et que, entre le support transversal (2) et l'au moins un corps de roulement (4), un élément de serrage (5) est disposé de manière à ce qu'un exercice de force du corps de roulement (4) en direction de la pièce de ferrure (3) soit généré par la force de serrage de l'élément de serrage (5).

2. Système de rail (1) selon la revendication 1, **caractérisé en ce que** la pièce de ferrure (3) est disposée sur des rails longitudinaux (10) et est déplaçable par rapport aux rails longitudinaux (10) parallèlement au sens de déplacement principal (100).

3. Système de rail (1) selon une des revendications précédentes, **caractérisé en ce que** l'élément de serrage (5) présente une caractéristique progressive au niveau des tolérances de mesure, en particulier des tolérances de mesure du corps de roulement (4).

4. Système de rail (1) selon une des revendications précédentes, **caractérisé en ce qu'**au moins deux corps de roulement (4) sont disposés en symétrie de miroir et/ou symétrie de rotation autour du support transversal (2), le plan de réfléchissement et/ou l'axe de rotation passant en particulier par un point central (101) du support transversal (2) dans un sens longitudinal.

5. Système de rail (1) selon une des revendications précédentes, **caractérisé en ce que** le support transversal (2) et/ou la pièce de ferrure (3) présente un évidement (14) dans la zone de contact avec un corps de roulement (4), de sorte que le corps de roulement (4) est guidé dans l'évidement (14).

6. Système de rail (1) selon une des revendications précédentes, **caractérisé en ce que** la pièce de ferrure (3) présente, dans une section transversale parallèle au sens de déplacement (100), des bords en forme de L (112), en particulier des bords arrondis (112), et au moins un corps de roulement (4) dans un bord (112) entre la pièce de ferrure (3) et le support transversal (2) ou est guidé entre la pièce de ferrure (3) et l'élément de serrage (5).

7. Système de rail (1) selon une des revendications précédentes, **caractérisé en ce que** le support transversal (2) comprend deux tubes creux parallèles (11) et au moins une traverse (12), les tubes creux (11) étant reliés entre eux par l'au moins une traverse (12) parallèle et/ou perpendiculaire à ceux-ci.

8. Système de rail (1) selon une des revendications précédentes, **caractérisé en ce que** la pièce de ferrure (3) s'étend pratiquement sur toute la longueur du support transversal (2).

9. Système de rail (1) selon une des revendications précédentes, **caractérisé en ce que** l'élément de serrage (5) comprend un ressort à lame, le ressort à lame ayant de préférence une forme de S.

10. Siège de véhicule (9) équipé d'un système de rail (1) selon une des revendications précédentes, **caractérisé en ce que** le siège de véhicule (9) est fixé au support transversal (2) et en particulier aux extrémités du support transversal (2).

11. Siège de véhicule (9) selon la revendication 10, **caractérisé en ce que** le siège de véhicule (9) est mobile parallèlement et/ou transversalement au sens de circulation principal (100).
